# EUROPEAN PATENT APPLICATION

(11) **EP 1 410 899 A1**
(43) Date of publication of application: **21.04.2004**
(21) Application number: 02257247.3
(22) Date of filing: 18.10.2002
(51) Int. Cl.: B29D 31/512

(54) **Method for making a shoe**

(71) Applicant: Chi, Cheng-Hsian, Taichung City (TW)
(72) Inventor: Chi, Cheng-Hsian, Taichung City (TW)
(74) Representative: Paget, Hugh Charles Edward

(57) **Abstract**

A method for making a shoe includes the steps of: preparing a mold (100) with a pair of side mold parts (110) formed with retaining recesses (111) ; preparing a pair of ornamental strips (21) formed with through-holes (213) and positioned in the retaining recesses (111) ; heating and softening an insole blank (41); placing an upper (10), an outsole (40) , and the softened insole blank (41) in the mold (100); and closing the mold (100) so as to press the softened insole blank (41) against the upper (10), the outsole (40) and the ornamental strips (21).

## Description

This invention relates to a method for making a shoe with embossed ornamental strips attached thereto.

Conventional shoes normally include an upper, an outsole, and a foamed EVA (ethylene vinyl acetate) insole disposed between the upper and the outsole. A pair of ornamental strips can be used to interconnect the upper and the outsole of the shoe and to surround the insole for enhancing the appearance of the shoe. The ornamental strips are generally adhered to peripheries of the upper, the outsole, and the foamed EVA insole with the use of an adhesive. The ornamental strips can be made from the same material as the foamed EVA insole or from other plastic materials. However, the ornamental strips of the thus formed shoe tend to separate from the shoe after a period of use due to gradual deterioration of the adhesive.

Another way of attaching the ornamental strips to the shoe involves the steps of connecting a bottom side of the ornamental strips to a plurality of threads by stitching, preheating and softening an insole blank, securing the ornamental strips to the softened insole blank by tying the softened insole blank to the threads, respectively mounting the upper and the outsole on a last and a bottom mold part of a mold, mounting the softened insole blank together with the ornamental strips on the outsole, and closing the mold so as to press the softened insole blank against the outsole, the upper, and the ornamental strips. The aforesaid method is disadvantageous in that the aforesaid tying operation for positioning the ornamental strips in the mold is laborious and time consuming. Moreover, flash is formed and overflows through the interface between the ornamental strips and the upper during the molding process when a larger size of the insole blank with respect to the ornamental strips is used, and removal of the flash results in higher manufacturing costs. Further, weak bonding between the ornamental strips and the insole blank and a poor pattern on the ornamental strips can be formed when a smaller size of the insole blank is used due to loose contacts between the ornamental strips and the insole blank and between the mold and the ornamental strips.

Preferably, an object of the present invention is to provide a method for making a shoe that is capable of overcoming the aforementioned drawbacks of the prior art.

According to the present invention, there is provided a method for making a shoe. The method comprises the steps of: (a) preparing an upper with a bottom wall and a peripheral wall extending upwardly from a peripheral side edge of the bottom wall and having a lower portion adjacent to the bottom wall; (b) preparing a mold including a last, a pair of side mold parts, and a bottom mold part that is opposite to the last, each of the side mold parts being formed with a retaining recess; (c) mounting the upper on the last; (d) mounting an outsole on the bottom mold part; (e) heating and softening an insole blank to a plastic state; (f) mounting the softened insole blank on the outsole; (g) preparing a pair of blank strips and forming each of the blank strips into a desired shape with an embossed pattern that conforms to that of the retaining recess in a respective one of the side mold parts, each of the embossed strips being formed with a through-hole; (h) respectively mounting the embossed strips in the retaining recesses in the side mold parts; (i) applying an adhesive to the lower portion of the peripheral wall of the upper, the bottom wall of the upper, and the outsole; and (j) closing the mold so as to press the softened insole blank against the bottom wall of the upper, the outsole, and the embossed strips in such a manner that a portion of the softened insole blank fills the through-holes in the embossed strips and a gap confined by the embossed strips and the lower portion of the peripheral wall of the upper.

In the drawings which illustrate an embodiment of the invention,
Fig. 1 is a block diagram illustrating consecutive steps of a preferred embodiment of a method for making a shoe according to the present invention;
Fig. 2 is an exploded perspective view to illustrate how a pair of embossed ornamental strips and an outsole are mounted in a mold according to the embodiment of this invention;
Fig. 3 is a schematic rear sectional view to illustrate how the ornamental strips are bonded to the outsole, an upper and an insole of the shoe according to the embodiment of this invention;
Fig. 4 is an exploded perspective view to illustrate an insole blank modified from the insole blank shown in Fig. 3; and
Fig. 5 is a schematic rear sectional view to illustrate the structure of the modified insole blank of Fig. 4.

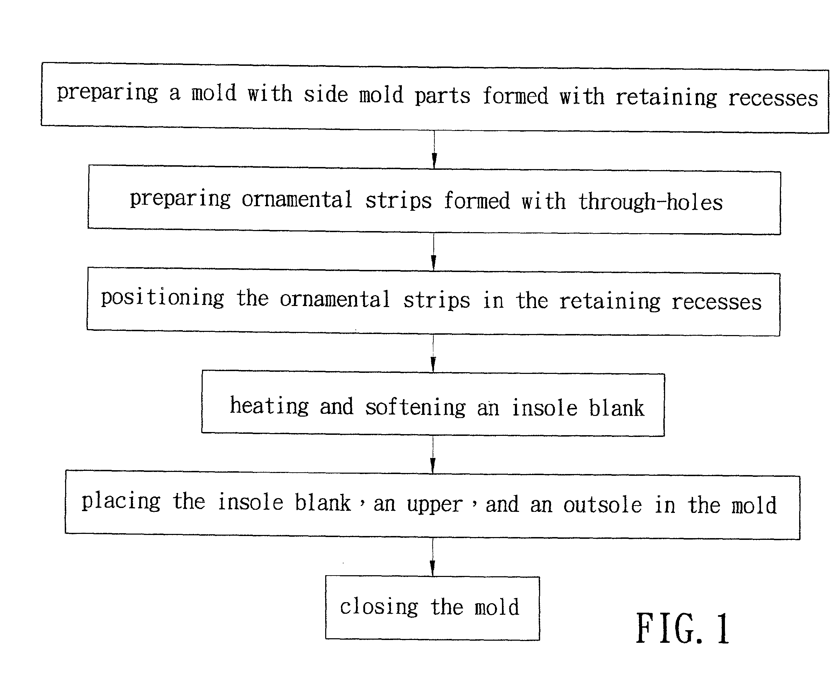

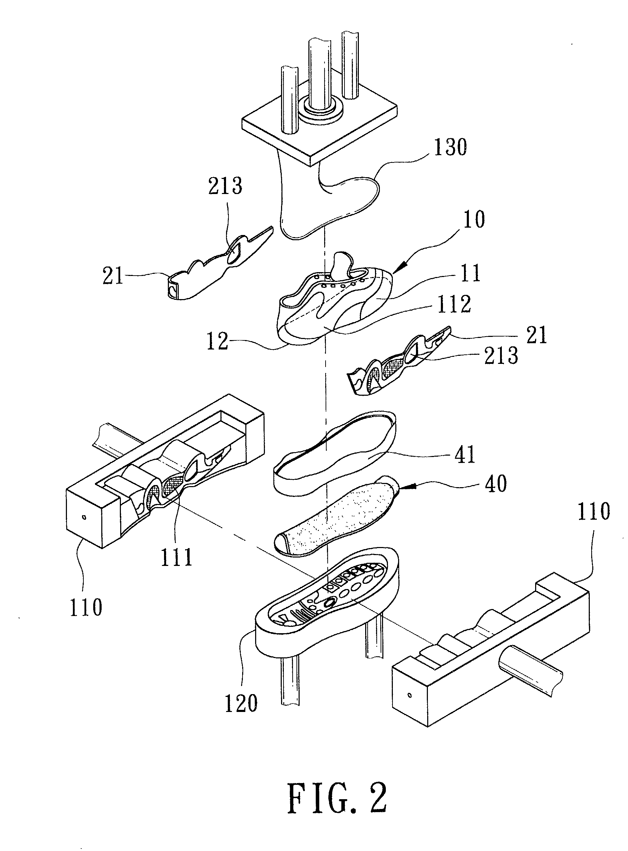

Figs. 1 to 3 illustrate a preferred embodiment of a method for making a shoe according to the present invention. The method comprises the steps of: (a) preparing an upper (10) with a bottom wall (12) and a peripheral wall (11) extending upwardly from a peripheral side edge of the bottom wall (12) and having a lower portion (112) adjacent to the bottom wall (12); (b) preparing a mold (100) including a last (130), a pair of side mold parts (110), and a bottom mold part (120) that is opposite to the last (130), each of the side mold parts (110) being formed with a retaining recess (111); (c) mounting the upper (10) on the last (130); (d) mounting an outsole (40) on the bottom mold part (120); (e) heating and softening an insole blank (41) to a plastic state; (f) mounting the softened insole blank (41) on the outsole (40); (g) preparing a pair of blank strips (21) and forming each of the blank strips (21) into a desired shape with an embossed pattern that conforms to that of the retaining recess (111) in a respective one of the side mold parts (110), each of the embossed strips (21) being formed with a through-hole (213); (h) respectively mounting the embossed strips (21) in the retaining recesses (111) in the side mold parts (110); (i) applying an adhesive to the lower portion (112) of the peripheral wall (11) of the upper (10), the bottom wall (12) of the upper (10), and the outsole (40); and (j) closing the mold (100) so as to press the softened insole blank (41) against the bottom wall (12) of the upper (10), the outsole (40), and the embossed strips (21) in such a manner that a portion of the softened insole blank (41) fills the through-holes (213) in the embossed strips (21) and a gap (50) confined by the embossed strips (21) and the lower portion (112) of the peripheral wall (11) of the upper (10).

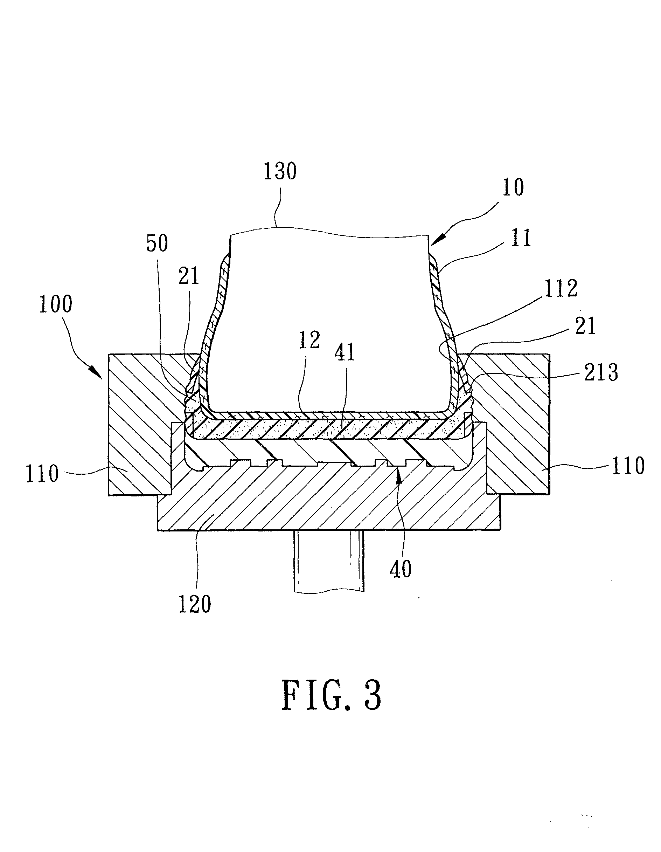

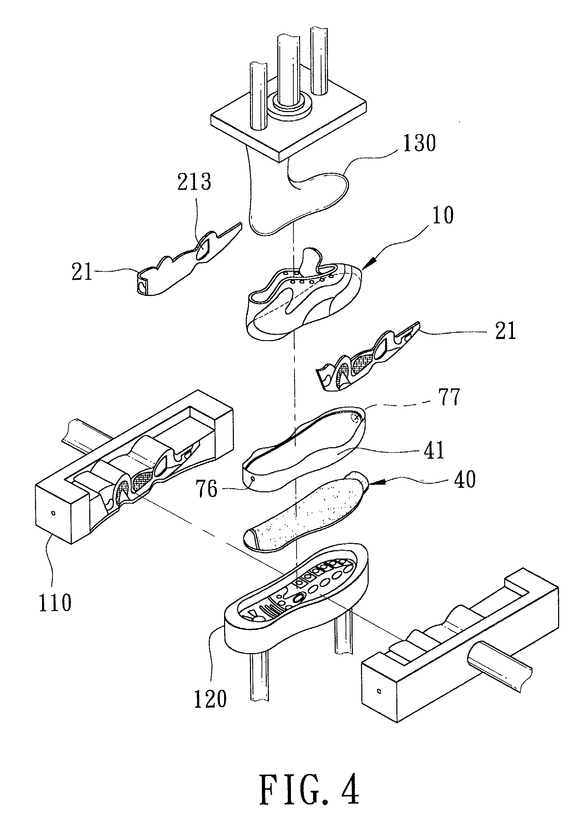

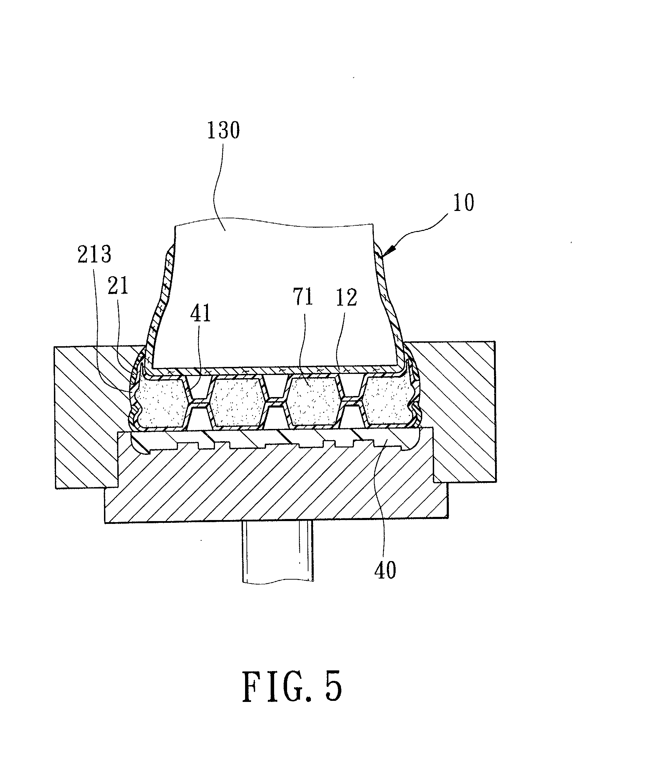

Figs. 4 and 5 illustrate an insole blank (41) that is modified from the insole blank (41) shown in Fig. 3, and that is formed with an inlet (76), an outlet (77) opposite to the inlet (76), and a plurality of spaced apart air chambers (71) in fluid communication with the inlet (76) and the outlet (77). The insole blank (41) is heated in the aforesaid step (e), and the air chambers (71) are filled with air by passing a hot air stream through the inlet (76), the outlet (77), and the air chambers (71) , followed by closing the inlet (76) and the outlet (77). In an alternative embodiment, the air chambers (71) are filled with air after the insole blank (41) is heated and softened.

By virtue of the retaining recesses (111) in the side mold parts (110) and the through-holes (213) in the ornamental strips (21) , the aforesaid drawbacks as encountered in the prior art can be eliminated.

## Claims

1. A method for making a shoe, **characterized by**:
(a) preparing an upper (10) with a bottom wall (12) and a peripheral wall (11) extending upwardly from a peripheral side edge of said bottom wall (12) and having a lower portion (112) adjacent to said bottom wall (12);
(b) preparing a mold (100) including a last (130), a pair of side mold parts (110), and a bottom mold part (120) that is opposite to said last (130) , each of said side mold parts being formed with a retaining recess (111);
(c) mounting said upper (10) on said last (130);
(d) mounting an outsole (40) on said bottom mold part (120);
(e) heating and softening an insole blank (41) to a plastic state;
(f) mounting said softened insole blank (41) on said outsole (40) ;
(g) preparing a pair of blank strips (21) and forming each of said blank strips (21) into a desired shape with an embossed pattern that conforms to that of said retaining recess (111) in a respective one of said side mold parts (110), each of said embossed strips (21) being formed with a through-hole (213) ;
(h) respectively mounting said embossed strips (21) in said retaining recesses (111) in said side mold parts (110);
(i) applying an adhesive to said lower portion (112) of said peripheral wall (11) of said upper (10), said bottom wall (12) of said upper (10), and said outsole (40) ; and
(j ) closing said mold (100) so as to press said softened insole blank (41) against said bottom wall (12) of said upper (10), said outsole (40), and said embossed strips (21) in such a manner that a portion of said softened insole blank (41) fills said through-holes (213) in said embossed strips (21) and a gap (50) confined by said embossed strips (21) and said lower portion (112) of said peripheral wall (11) of said upper (10).

2. The method of Claim 1, **characterized in that** said insole blank (41) is formed with an inlet (76), an outlet (77) opposite to said inlet (76), and a plurality of spaced apart air chambers (71) in fluid communication with said inlet (76) and said outlet (77), and that said insole blank (41) is heated in step (e) by passing a hot air stream through said inlet (76), said outlet (77), and said air chambers (71), followed by closing said inlet (76) and said outlet (77).

3. The method of Claim 1, **characterized in that** said insole blank (41) is formed with an inlet (76), an outlet (77) opposite to said inlet (76), and a plurality of spaced apart air chambers (71) in fluid communication with said inlet (76) and said outlet (77) , and that said air chambers (71) are filled with air by passing an air stream through said inlet (76) , said outlet (77) , and said air chambers (71), followed by closing said inlet (76) and said outlet (77) , after heating of said insole blank (10) in step (e).
